# EUROPÄISCHE PATENTSCHRIFT

(11) **EP 0 961 942 B1**
(45) Veröffentlichungstag und Bekanntmachung des Hinweises auf die Patenterteilung: **05.09.2001**
(21) Anmeldenummer: 98912267.6
(22) Anmeldetag: 18.02.1998
(51) Int. Cl.: G02B 6/38

(54) **STECKVERBINDER FÜR LICHTWELLENLEITER**
PLUG-IN CONNECTOR FOR A LIGHT WAVE GUIDE
CONNECTEUR A FICHES POUR GUIDE D'ONDES LUMINEUSES

(30) Priorität: 20.02.1997 DE 19706927
(43) Veröffentlichungstag der Anmeldung: 08.12.1999
(73) Patentinhaber: Ratio-Plast-Optoelectronics GmbH, 32584 Löhne (DE); PHOENIX CONTACT GmbH & Co. Kg, 32825 Blomberg (DE)
(72) Erfinder: BREDTHAUER, Falko, D-32423 Minden (DE); BERG,Roland, D-32825 Blomberg (DE)
(86) Internationale Anmeldenummer: DE9800477
(87) Internationale Veröffentlichungsnummer: WO9837446

(56) Entgegenhaltungen:
- EP-A- 0 026 553
- EP-A- 0 179 563
- GB-A- 2 040 062
- GB-A- 2 097 149
- PATENT ABSTRACTS OF JAPAN vol. 009, no. 199 (P-380), 16.August 1985 & JP 60 063506 A (FURUKAWA DENKI KOGYO KK), 11.April 1985,

## Beschreibung

Die Erfindung betrifft einen Steckverbinder für Lichtwellenleiter gemäß dem Oberbegriff des Hauptanspruches.

Es ist ein Lichtleiter-Stecker DE 35 33 433 bekannt, bei dem ein Lichtwellenleitkabel, welches gewöhnlich aus einem Außenmantel, einer Zugentlastung, einem optischen Innenmantel und den im Zentrum geführten Lichtwellenleiter aus Glasfaser besteht, durch eine plastische Verformung einer am Lichtleiter-Stecker angeordneten Crimphülse festgelegt wird.

Ein weiterer Licht leiterstecker mit mehreren klemmvorrichtungen ist aus GB 2 097 149 A bekannt.

Nachteilig an diesen vorbekannten Lichtleiter-Stecken ist, wie bei allen anderen bekannten Steckverbindern für Lichtwellen-Leiter auch, daß sie sich nur einmal an einem Glasfaserkabel montieren lassen. Erreicht der Steckverbinder nach der Montage nicht die gewünschten Eigenschaften wie zum Beispiel die geforderte Einkoppeldämpfung, muß er vom Kabel abgetrennt und als Schrott entsorgt werden. Eine Wiederverwendung des Lichtleiter-Steckers ist deshalb gänzlich ausgeschlossen.

Die Faserfixierung der Zugentlastung wird bei den vorbekannten Steckverbindern unterschiedlich gelöst. Entweder wird die Faser im Steckverbinder verklebt oder durch Verpressen eines Kunststoffteils oder Bleiröhrchens unlösbar fixiert. Bei anderen bekannten Steckverbindern wird die Zugentlastung zusammen mit dem Kabelmantel unlösbar an diesem angecrimpt. Ein weiterer Nachteil dieser herkömmlichen Art der Steckermontage besteht in der Anwendung spezieller Werkzeuge oder Klebern wie zum Beispiel Zweikomponentenkleber und Mischhilfen, Spritzen mit Kanülen zum Befüllen des Steckverbinders mit dem Kleber, Heizboxen zum Aushärten des Klebers oder Crimpzangen und andere Preßvorrichtungen zur plastischen Verformung der Crimphülsen. Diese verschiedenen Verbindungsarten sind jeweils sehr aufwendig und verlangen vom Ausführenden eine erhöhte Aufmerksamkeit, so daß sich dessen Tagesform stark auf das Arbeitsergebnis übertragen kann, was dazu führen kann, daß nicht schon der erste oder zweite Versuch des Anbringens eines Steckverbinders die geforderten Eigenschaften liefert und mehrere Steckverbinder als Ausschuß entsorgt werden müssen.

Aufgabe der Erfindung ist es deshalb, einen Steckverbinder für Lichtwellenleitkabel zur Verfügung zu stellen, der wiederverwendbar ist und sich ohne Spezialwerkzeug am Ende eines Lichtwellenleitkabels anschließen läßt.

Die Lösung dieser Aufgabe wird in Verbindung mit den Oberbegriffsmerkmalen erfindungsgemäß durch die im kennzeichnenden Teil des Patentanspruches 1 angegebene technische Lehre vermittelt.

Der erfinderische Steckverbinder kann nun an ein Lichtwellenleitkabel, insbesondere an ein Glasfaserkabel montiert werden, ohne die Faser verkleben oder den Außenmantel des Kabels ancrimpen zu müssen. Durch das Klemmsystem im Steckverbinder können die drei Kabeikomponenten Kabelmantel, Zugentlastung und Lichtwellenleiter mechanisch fixiert werden. Durch die lösbare Klemmverbindung ist die Demontierbarkeit und die Wiederverwendbarkeit des Steckverbinders gewährleistet. Weiterhin entfallen durch den Verzicht auf Klebung und Crimpung alle bisher benötigten Werkzeuge. Die Endflächenpräparation kann dabei wie bisher erfolgen, d.h. die überstehende Faser auf der Steckseite des Steckverbinders wird angeritzt und abgebrochen oder abgeschliffen und poliert.

Der neuartige Steckverbinder ist wiederverwendbar und muß nicht verschrottet werden, wenn er nach der Montage nicht die geforderten optischen Eigenschaften erreicht, sondern er kann zu einem erneuten Montageversuch demontiert und nach erneuter Abisolierung des Lichtwellenleitkabels wieder montiert werden. Zu dieser Montage ist kein Spezialwerkzeug notwendig, so daß speziell bei Anwendern, die nur geringe Stückzahlen montieren, eine teure Erstausstattung an Werkzeugen und Heizboxen entfällt.

Weiterhin führt dieser neuartige Steckverbinder zu einer Zeitersparnis bei der Montage, da die für das Verkleben der Glasfaser mit dem Steckverbinder notwendigen Arbeiten wie das Anmischen des Klebers und die Wartezeit für das Aushärten des Klebers entfallen. Weiterhin entfallen sämtliche Arbeitsgänge des Crimpens.

Besonders hervorzuheben ist, daß die Fasern der Zugentlastung separat eingespannt werden, wobei gegenüber dem Außenmantel eine zusätzliche Zugspannung erzeugt wird, so daß sichergestellt ist, daß die Fasern oder das Kevlargam der Zugentlastung auftretende Zugkräfte sofort aufnehmen und nicht zuerst der Außenmantel des Lichtwellenleitkabels.

Vorteilhaft ist weiterhin, daß die Handhabung bei der Montage derart vereinfacht ist, daß die Klemmung aller drei Klemmstellen durch das Anziehen einer gemeinsamen

Besonders hervorzuheben ist, daß die Fasern der Zugentlastung separat eingespannt werden, wobei gegenüber dem Außenmantel eine zusätzliche Zugspannung erzeugt wird, so daß sichergestellt ist, daß die Fasern oder das Kevlargarn der Zugentlastung auftretende Zugkräfte sofort aufnehmen und nicht zuerst der Außenmantel des Lichtwellenleitkabels.

Vorteilhaft ist weiterhin, daß die Handhabung bei der Montage derart vereinfacht ist, daß die Klemmung aller drei Klemmstellen durch das Anziehen einer gemeinsamen Klemm-Mutter erfolgen kann. Ein weiterer Vorteil besteht darin, daß mehrere Elemente des Klemmsystems in einem, mit einer Aufpreßhülse versehenen Haltebreich der Ferule fliegend, aber verliersicher angeordnet sind, so daß der Steckverbinder ohne eine zusätzliche Knickschutzhülle nur aus drei separaten Teilen besteht.

Weitere vorteilhafte Ausgestaltungen des Gegenstandes der Erfindung ergeben sich aus den Unteransprüchen.

Nachfolgend ist ein Ausführungsbeispiel der Erfindung anhand der Zeichnungen näher beschrieben. Es zeigen:

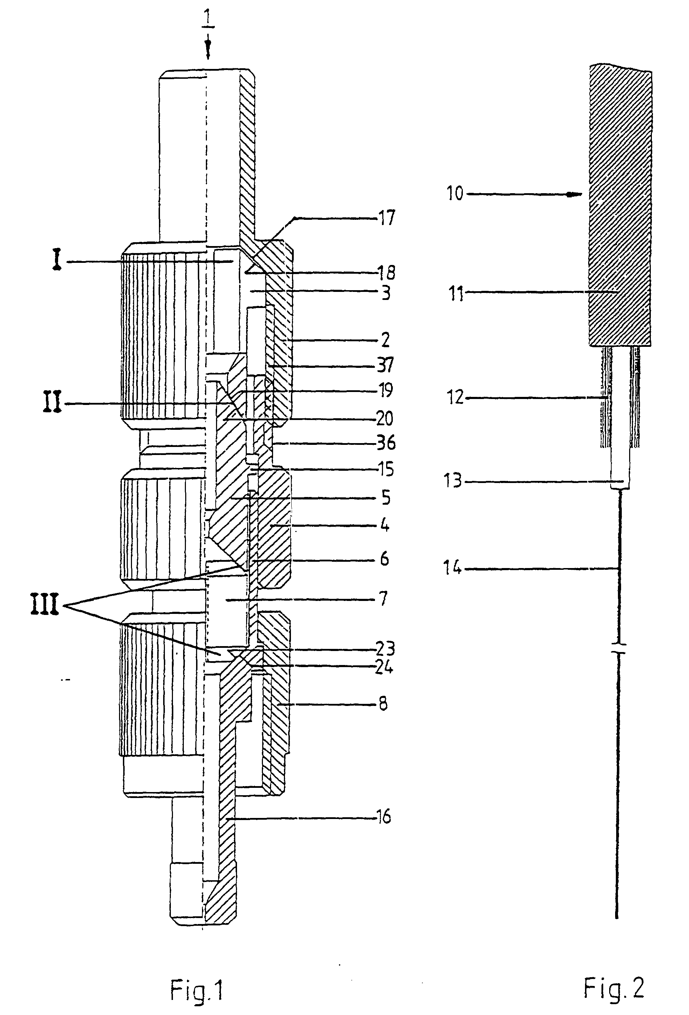

Fig. 1 die Ansicht eines zusammengeschraubten Steckverbinders im Teilschnitt,
Fig. 2 ein abisoliertes Lichtwellenleitkabel,

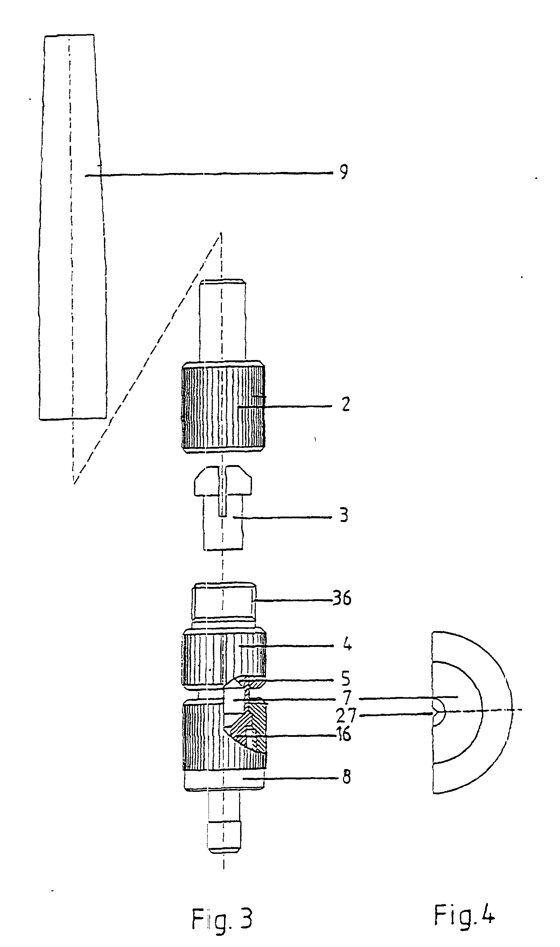

Fig. 3 eine Einzelteilzeichnung der handhabbaren Bauteile,
Fig. 4 eines von zwei Klemmstücken in vergrößerter Draufsicht,

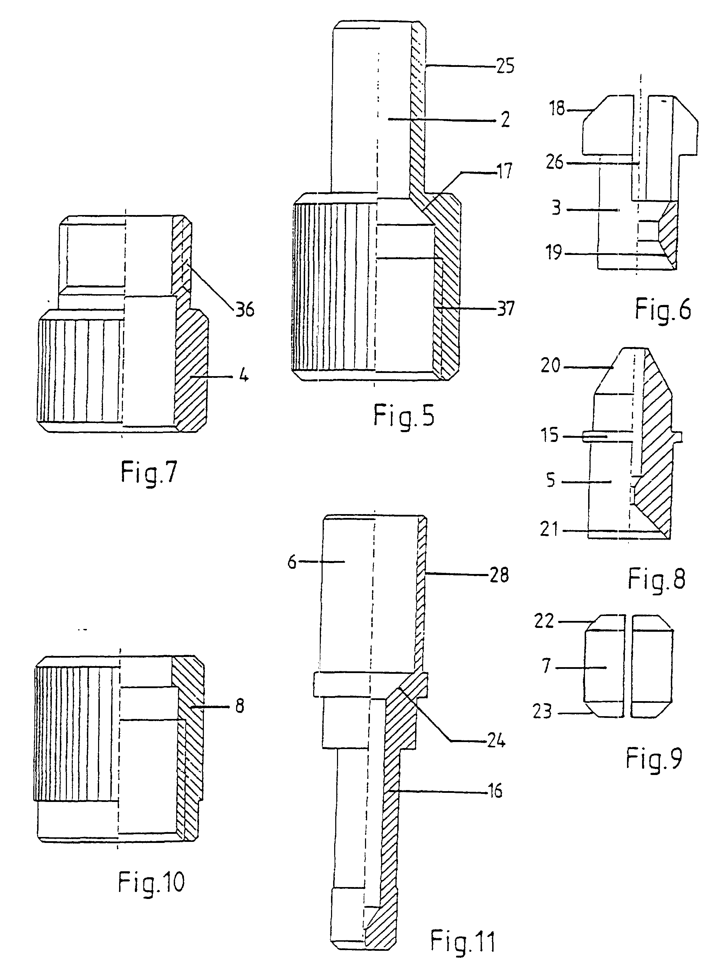

Fig. 5 eine Klemm-Mutter im Teilschnitt,
Fig. 6 ein Außenmantel- und Zugentlastungsklemmstück im Teilschnitt,
Fig. 7 eine Aufpreßhülse im Teilschnitt,
Fig. 8 eine Druckhülse im Teilschnitt,
Fig. 9 zwei Klemmstücke für den Lichtwellenleiter,
Fig. 10 eine Überwurfmutter im Teilschnitt und
Fig. 11 eine Ferule im Teilschnitt.

Die dargestellte Ausführungsform eines Steckverbinders 1 ist ausgelegt für ein Uchtwellenleitkabel 10 mit einem Außendurchmesser des Außenmantels 11 von 3 mm, mit einer einen Innenmantel 13 umgebenden Zugentlastung 12 und einem Lichtwellenleiter 14 mit einem Glasfaserdurchrnesser von 200/230 µm. Der Steckverbinder 1 besteht im wesentlichen aus einer Klemm-Mutter 2 mit einem hohlzylindrischen Endabschnitt 25 zum Aufschieben einer Knickschutzhülle 9, aus einem Klemmstück 3 des Außenmantels 11 und der Zugentlastung 12, einer Aufpreßhülse 4, einer Innenhülse 5, einer Ferule 16 mit einem Haltebereich 28, zwei Klemmstücken 7 für den Lichtwellenleiter 14 und einer Überwurfmutter 8 zur Fixierung des Steckverbinders 1 an einer optischen Schnittstelle.

Die Klemm-Mutter 2 weist neben dem Endabschnitt 25 einen Innenkonus 17 auf, die mit einem Außenkonus 18 des Klemmstücks 3 für den Außenmantel 11 und die Zugentlastung 12 korrespondierend ausgebildet ist. Das Klemmstück 3 weist axiale Einschnitte 26 auf, so daß bei einem Verspannen der Klemm-Mutter 2 der freie Innendurchmesser des Klemmstücks 3 elastisch verringerbar ist. Das Klemmstück 3 weist auf seiner entgegengesetzten Seite einen Innenkonus 19 auf, der wiederum mit einem Außenkonus 20 der Innenhülse 5 korrespondierend ausgebildet ist, wobei zwischen diesen beiden Flächen das zur Zugentlastung 12 verwendete Kevlargam eingeklemmt wird, welches beim Anziehen der Klemm-Mutter 2 und einem Aufschieben des Klemmstückes 3 auf die Innenhülse 5 gegenüber dem Außenmantel 11 des Lichtwellenleitkabels 10 auf Zug beansprucht wird, so daß bei der Benutzung des Kabels aufgebrachte Zugkräfte sofort von der Zugentlastung 12 aufgenommen werden und nicht erst in den Außenmantel 11 oder gar bis zum Lichtwellenleiter 14 selbst gelangen können. Auf der dem Außenkonus 20 der Innenhülse 5 entgegengesetzten Seite der Innenhülse 5 weist diese einen weiteren Innenkonus 21 auf, welcher seinerseits mit den Außenkonussen 22 der beiden Klemmslücke 7 zusammenwirkt, welche beide halbzylinderförmig ausgebildet sind und welche entlang ihrer Mittelsenkrechten eine V-förmige Nut 27 zur Aufnahme eines Lichtwellenleiters aufweisen. An ihrem entgegengesetzten Ende besitzen sie einen weiteren Außenkonus 23, welcher mit einem Innenkonus 24 in der Ferule 16 korrespondiert.

Die Klemmstücke 7 für den Lichtwellenleiter 14 und die Innenhülse 5 sind in im Haltebereich 28 der Ferule 16 gelagert, auf die die Aufpreßhülse 4 form- und/oder kraftschlüssig aufgesetzt ist, wobei ein von der Innenhülse 5 vorstehender Ringflansch 15 ein Herausfallen aus der Außenhülse 6 und der Aufpreßhülse 4 verhindert. Zwischen Aufpreßhülse 4 und Haltebereich 28 der Ferule 16 ist eine Überwurfmutter 8 frei drehbar gehalten.

Die verschiedenen Innen- und Außenkonusse sind jeweils kegelförmig ausgebildet, wobei der Innenkonus 19 des Klemmstücks 3 und der Außenkonus 20 der Innenhülse 5 gegenüber der Längsachse des Steckverbinders 1 stärker abgewinkelt sind als die anderen kegligen Flächen, so daß ein Spannen der Zugentlastung sicher gewährleistet werden kann.

Zur Montage des Steckverbinders 1 wird ein Lichtwellenleitkabel 10 entsprechend abisoliert, die hintere Klemm-Mutter 2 des Steckverbinders 1 losgeschraubt und das lose Klemmstück 3 für den Außenmantel 11 und die Zugentlastung 12 dem Steckverbinder 1 entnommen. Anschließend wird das Lichtwellenleitkabel 10 durch die hintere Klemm-Mutter 2 gesteckt und danach das Klemmstück 3 für den Außenmantel 11 und die Zugentlastung 12 bis zum Anschlag auf das Lichtwellenleitkabel 10 geschoben. Hierbei ist darauf zu achten, daß das Kevlargam der Zugentlastung 12 vollständig mit durch das Klemmstück 3 hindurchgeführt wird. Danach wird das Lichtwellenleitkabel 10 mit der Klemm-Mutter 2 und dem Klemmstück 3 bis zum Anschlag in den vorderen Teil des Steckverbinders 1 eingeführt, der aus der Aufpreßhülse 4, der Innenhülse 5, der Ferule 16, den Klemmstücken 7 und der Überwurfmutter 8 besteht. Die Innenhülse 5 und die Klemmstücke 7 sind dabei im noch unverspannten Zustand frei beweglich. Die Glasfaser, bzw. der Lichtwellenleiter 14 steht bei entsprechender Abisolierung etwa 20 mm aus der Ferule 16 des Steckverbinders 1 hervor. Durch das Anziehen der Klemm-Mutter 2 auf dem Gewinde 27 der Aufpreßmutter 4 wird auf die Innenteile des Steckverbinders 1, nämlich das Klemmstück 3, die Innenhülse 5 und die Klemmstücke 7 für den Lichtwellenleiter 14 ein radialer Druck ausgeübt, der eine gleichzeitige und dreifache Klemmwirkung auf den Lichtwellenleiter 14, das Kevlargarn der Zugentlastung 12 und den Außenmantel 11 des Lichtwellenleitkabels 10 hervorruft.

Abschließend wird die Knickschutzhülle 9, die vorher auf das Lichtwellenleitkabel 10 aufgezogen worden ist, bis zum Anschlag aufgeschoben und die Endflächen des Lichtwellenleiters 14 entsprechend gängiger Verfahren präpariert.

## Patentansprüche

1. Steckverbinder (1) für Lichtwellenleitkabel (10) mit einem Außenmantel (11), einer Zugentlastung (12), einem optischen Innenmantel (13) und einem Lichtwellenleiter (14), bestehend aus einer Ferule (16), einer Innenhülse (5), einer Klemmvorrichtung III für den Lichtwellenleiter (14), einer Überwurfmutter (8) und einer Klemmvorrichtung I für den Außenmantel (11) des Lichtwellenleitkabels (10), **dadurch gekennzeichnet**, daß die Klemmvorrichtung III für den Lichtwellenleiter (14) und die Klemmvorrichtung I für den Außenmantel (11) des Lichtwellenleitkabels (10) beide aus durch Aufhebung einer Klemmkraft lösbaren Klemmverbindungen bestehen und daß zwischen der Klemmvorrichtung III für den Lichtwellenleiter (14) und der Klemmvorrichtung I für den Außenmantel (11) des Lichtwellenleitkabels (10) eine weitere durch die Aufhebung einer Klemmkraft lösbare Klemmvorrichtung II für die Zugentlastung (12) des Lichtwellenleitkabels (10) angeordnet ist und daß die drei Klemmvorrichtungen I,II,III in dem Steckverbinder (1) hintereinander angeordnet sind und gemeinsam über eine, auf einer mit der Ferule (16) verbundenen Aufpreßhülse (4), die mit einem Gewinde (36) versehen ist, aufgeschraubte Klemm-Mutter (2) mit Gewinde (37) mit einer Klemmkraft beaufschlagt aktiviert sind.

2. Steckverbinder nach Anspruch 1, **dadurch gekennzeichnet**, daß die Klemmvorrichtung III für den Lichtwellenleiter (4) aus mindestens zwei Klemmstücken (7) besteht, die teilzylindrisch ausgebildet und an beiden Enden konisch geformt sind und daß die konischen Flächen an der einen Seite auf konischen Innenflächen der Ferule (16) und auf der gegenüberliegenden Seite an der konischen Innenfläche einer als Druckhülse ausgebildeten Innenhülse (5) aufliegen, wobei die Innenhülse (5) mittelbar von einem Ktemrnstück (3) für den Außenmantel (11) und die Zugentlastung (12) über die Klemm-Mutter (2) mit axialem Druck beaufschlagbar ist.

3. Steckverbinder nach Anspruch 2, **dadurch gekennzeichnet**, daß die Klemmvorrichtung III für den Lichtwellenleiter (4) aus zwei halbzylindrischen Klemmstücken (7) besteht, die entlang ihrer Mittelachse jeweils eine V-förmige Ausnehmung aufweisen, in der ein Lichtwellenleiter (14) entlang vier dünnen Berührungslinien gehalten wird.

4. Steckverbinder nach Anspruch 2, **dadurch gekennzeichnet**, daß die Klemmvorrichtung III für den Lichtwellenleiter (14) aus drei etwa 120° umfassenden teilzylindrischen Klemmstücken besteht, deren zur Längsachse gerichteten Spitzen abgeflacht und so ausgebildet sind, daß ein Lichtwellenleiter (14) entlang drei dünnen Berührungslinien gehalten ist.

5. Steckverbinder nach einem der vorgenannten Ansprüche, **dadurch gekennzeichnet**, daß die Innenhülse (5) einen Ringflansch (15) mit einem etwas kleineren Außendurchmesser als dem des Haltebereichs (28) der Ferule (16) aufweist und durch eine auf diesem Haltebereich (28) der Außenhülse (6) aufgesetzte Aufpreßhülse (4) zusammen mit den Klemmstücken (7) spielbehaftet in der Ferule (16) gelagert ist.

6. Steckverbinder nach einem der vorgenannten Ansprüche, **dadurch gekennzeichnet**, daß das Klemmstück (3) für den Außenmantel (11) und die Zugentlastung (12) an seiner der Innenhülse (5) abgewandten Seite konisch ausgeführt und axial geschlitzt ist und daß die konische Stirnseite an einem Innenkonus (17) der Klemm-Mutter (2) anliegt, so daß beim Anziehen der Klemm-Mutter (2) eine radial nach Innen gerichtete und elastische Verformung des Klemmstücks (3) erzeugbar ist und der Außenmantel (11) eines Lichtwellenleitkabels (10) festklemmbar ist.

7. Steckverbinder nach einem der vorgenannten Ansprüche, **dadurch gekennzeichnet**, daß die Konusse (17, 18, 19, 20, 21, 22, 23, 24) kegelförmig ausgebildet sind und daß die einander zugewandten Konusse (19) des Klemmstückes (3) und der Konus (20) der Innenhülse (5) einen kleineren Winkel gegenüber der Längsachse des Steckverbinders (1) dufweisen, als die anderen Konuspaarungen.

## Claims

1. A plug connector (1) for optical fiber cables (10) with an outer jacket (11), a strain relief (12), an optical inner jacket (13) and an optical fiber (14), comprised of a ferrule (16), an inner sleeve (5), a clamping device III for the optical fiber (14), a union nut (8) and a clamping device I for the outer jacket (11) of the optical fiber cable (10), characterized by the fact that the clamping device III for the optical fiber (14) and the clamping device I for the outer jacket (11) of the optical fiber cable (1) both consist of clamping connections that can be dissolved by lifting a clamping force, and that another lamping device II for the strain relief (12) of the optical fiber cable (10) that can be dissolved by lifting a clamping force is located between the clamping device III for the optical fiber (14) and the clamping device I for the outer jacket (11) of the optical fiber cable (10), and that the three clamping devices I, II, III in the plug connector (1) are situated one after the other, and together are activated in response to a clamping force by means of a clamping nut (2) with a thread (37) screwed onto a press-on sleeve (4) provided with a thread (36) and connected with the ferrule (16).

2. A plug connector according to claim 1, characterized by the fact that the clamping device III for the optical fiber (4) consists of at least two clamping parts (7) with a cylindrical design and conically shaped at both ends, and that the conical surfaces lie on conical inner surfaces of the ferrule (16) on the one side, and on the conical inner surface of an inner sleeve (5) designed as a compression sleeve on the opposing side, wherein the inner sleeve (5) can indirectly be exposed to an axial pressure form a clamping part (4) for the outer jacket 911) and the strain relief (12) via the clamping nut (2).

3. A plug connector according to claim 2, characterized by the fact that the clamping device III for the optical fiber (4) consists of two semi-cylindrical clamping parts (7), which each have a V-shaped recess along their central axis, in which an optical fiber (14) is held along four thin contact lines.

4. A plug connector according to claim 2, characterized by the fact that the clamping device III for the optical fiber (14) consists of three cylindrical clamping parts comprising roughly 120°, whose tips directed toward the longitudinal axis are evened out and designed in such a way that an optical fiber (14) is held along three thin lines of contact.

5. A plug connector according to one of the preceding claims, characterized by the fact that the inner sleeve (5) has an annular flange (15) with a somewhat smaller outer diameter than that of the mounting area (28) of the ferrule (16), and is held with clearance in the ferrule (16) together with the clamping parts (7) by a press-on sleeve (4) placed on this mounting area (28) of the outer sleeve (6).

6. A plug connector according to one of the preceding claims, characterized by the fact that the clamping part (3) for the outer jacket (11) and the strain relief (12) on its side facing away from the inner sleeve (5) are conical and axially slit, and that the conical face abuts an inner cone (17) of the clamping nut (2), so that, when the clamping nut (2) is tightened, a radially inwardly directed, elastic deformation of the clamping part (3) can be generated, and the outer jacket (11) of an optical fiber cable (10) can be clamped into position.

7. A plug connector according to one of the preceding claims, characterized by the fact that the cones (17, 18, 19, 20, 21, 22, 23, 24) are spherical, and that the mutually facing cones (19) of the clamping part (3) and the cone (20) of the inner sleeve (5) have a smaller angle relative to the longitudinal axis of the plug connector (1) than the other cone pairs.

## Revendications

1. Fiche de raccordement (1) pour câble conducteur d'ondes lumineuses (10) avec une enveloppe extérieure (11), une ligne de délestage de traction (12), une enveloppe intérieure optique (13) et un conducteur d'ondes lumineuses (14), consistant en une férule (16), une douille intérieure (5), un dispositif d'assemblage III pour le conducteur d'ondes lumineuses (14), un écrou-raccord (8) et un dispositif d'assemblage I pour l'enveloppe extérieure (11) du câble conducteur d'ondes lumineuses (10), **caractérisée en ce que** le dispositif d'assemblage III pour le conducteur d'ondes lumineuses (14) et le dispositif d'assemblage I pour l'enveloppe extérieure (11) du câble conducteur d'ondes lumineuses (10) sont formés tous deux par liaison d'éléments pouvant être dissociés par desserrage et qu'entre le dispositif d'assemblage III pour le conducteur d'ondes lumineuses (14) et le dispositif d'assemblage I pour l'enveloppe extérieure (11) du câble conducteur d'ondes lumineuses (10), est installé un autre dispositif d'assemblage II pouvant être desserré pour la ligne de délestage de traction (12) du câble conducteur d'ondes lumineuses (10) et que les trois dispositifs d'assemblage I, II, III sont placés l'un derrière l'autre dans la fiche (1) et sont activés ensemble par application d'une force de blocage sur une douille de compression (4) connectée à la férule (16), équipée d'un filetage (36), par l'intermédiaire d'une douille de blocage (2).

2. Fiche de raccordement selon la revendication 1, **caractérisée en ce que** le dispositif d'assemblage III pour le conducteur d'ondes lumineuses (4) consiste en au moins deux pièces d'assemblage (7), de conception partiellement cylindrique et ayant une forme conique à leurs deux bouts et que les surfaces coniques reposent, d'un côté, sur les surfaces coniques intérieures de la férule (16) et, du côté opposé, sur la surface conique intérieure d'une douille intérieure (5) conçue comme un manchon de pression, alors que la douille intérieure (5) peut être poussée directement par une pièce d'assemblage (3) pour l'enveloppe extérieure (11) et la ligne de délestage de traction (12) par l'écrou de blocage (2) grâce à une pression axiale.

3. Fiche selon la revendication 2, **caractérisée en ce que** le dispositif d'assemblage III pour le conducteur d'ondes lumineuses (4) consiste en deux pièces d'assemblage demi-cylindriques (7), qui présentent chacune, le long de leur axe médian, un évidement en forme de V, dans lequel est maintenu un conducteur d'ondes lumineuses (14) le long de quatre fines lignes de contact.

4. Fiche selon la revendication 2, **caractérisée en ce que** le dispositif d'assemblage III pour le conducteur d'ondes lumineuses (14) consiste en trois pièces d'assemblage partiellement cylindriques formant un angle d'environ 120°, dont les pointes orientées dans l'axe longitudinal sont aplaties et conçues de sorte qu'un conducteur d'ondes lumineuses (14) soit maintenu le long de trois fines lignes de contact.

5. Fiche selon une des revendiccitions précédentes, **caractérisée en ce que** la douille intérieure (5) comporte une bride circulaire (15) d'un diamètre un peu inférieur à celui de la zone de maintien (28) de la férule (16) et est positionnée avec les pièces d'assemblage (7), avec du jeu, dans la férule (16) grâce à un manchon de compression (4) placé sur cette zone de maintien (28) de la douille extérieure (6).

6. Fiche selon une des revendications précédentes, **caractérisée en ce que** la pièce d'assemblage (3) pour l'enveloppe extérieure (11) et la ligne de délestage de traction (12) est d'une conception conique sur sa face éloignée de la douille intérieure (5) et comporte une incision axiale, et que la face frontale conique jouxte un cône intérieur (17) de l'écrou de blocage (2), de sorte que, lors de la traction de l'écrou de blocage (2) une déformation élastique orientée de manière radiale vers l'intérieur de la pièce d'assemblage (3) peut être obtenue et que l'enveloppe extérieure (11) d'un câble conducteur d'ondes lumineuses (10) peut être fixée solidement.

7. Fiche selon une des revendications précédentes, **caractérisée en ce que** les cônes (17, 18, 19, 20, 21, 22, 23, 24) sont de conception conique et que les cônes orientés l'un vers l'autre (19) de la pièce d'assemblage (3) et le cône (20) de la douille intérieure (5) forment, par rapport à l'axe longitudinal de la fiche (1), un angle plus petit que les autres paires de cônes.
